# EUROPEAN PATENT SPECIFICATION

(11) **EP 2 324 693 B1**
(45) Date of publication and mention of the grant of the patent: **14.11.2012**
(21) Application number: 10191394.5
(22) Date of filing: 16.11.2010
(51) Int. Cl.: A01B 63/02, A01B 59/06

(54) **Tool suspension**
Werkzeugaufhängung
Suspension d'outil

(30) Priority: 20.11.2009 DK 200970219
(43) Date of publication of application: 25.05.2011
(73) Proprietor: Kaastrup, Søren, 7870 Roslev (DK)
(72) Inventor: Kaastrup, Søren, 7870 Roslev (DK)
(74) Representative: Nielsen, Leif

(56) References cited:
- EP-A2- 0 432 815
- DE-A1- 4 110 265

## Description

### Field of the Invention

The present invention concerns a tool suspension for a vehicle, preferably a tractor, including a first frame for mounting the tool suspension and a second frame for mounting a tool, where the tool suspension includes a pivot arm arrangement which is pivotably mounted between the first and second frame, where the tool suspension has at least one extreme position with the second frame in a position beside the driving direction of the vehicle, where the tool suspension has a transport position with the second frame in a position in line with the driving direction of the vehicle, and where the tool suspension is provided with a first locking arrangement for retaining the second frame in a position from the extreme position and to the transport position.

In the present application, the term "driving direction" means the direction in which the vehicle is moving or is intended to move such that the vehicle has a driving direction even when it is standing still. The driving direction is an axis that coincides with a longitudinal vertically oriented central plane through the vehicle, so that a parallel central plane through the second frame coincides with the central plane of the vehicle in the transport position and displaced laterally relative to the central plane of the vehicle between the transport position and the extreme position.

### Background of the Invention

When cultivating soil areas, the farmers want a certain texture of the soil, where the uppermost part of the soil is worked at a depth of about five centimetres, whereas the soil layers under the worked soil layer are to be firm. This has appeared to provide the best seedbed for the selected crops and the greatest yield afterwards.

The common procedure by cultivating a field is as follows:
a) The soil is ploughed at a depth up to 25 cm;
b) the soil is compacted by a soil compacter or a roller;
c) the soil is harrowed for sowing;
d) a chosen crop is sown; and
e) the soil is compacted around the seeds with a soil compacter or roller.

The disadvantage of this procedure for cultivating a field is that the farmer has to drive over the field at least once for each of the above soil preparation types, which is expensive and time-consuming.

As a solution to this, agricultural machine producers make combination machines where two or more of the above soil preparation types are performed in one and the same round over the field.

The ideal would be to perform all five soil preparation types at once, but this will require a large and long combination machine, something which hitherto has been impossible.

For example, a plough has been made, provided with a soil compacter which is drawn behind the plough. a-b are thus combined in one operation.

Another example of combination machine is a harrowing/sowing/rolling machine where the above soil preparation type c-e is performed in one operation.

Both examples are drawn behind a vehicle, e.g. a tractor.

The drawback of the first example is that the machine is difficult to manoeuvre on fields which are small or with corners, as it is only possible to back with this type of combination machine with difficulty.

DE 29800137 U1 discloses a tool suspension for a tractor where the tool suspension includes a pivot arm arrangement which is pivotably mounted between the tractor and the tool suspended on the tool suspension. The tool may thus be pivoted between a first and a second extreme position on one and the other side, respectively, of the driving direction of the tractor. A drawback of DE 29800137 U1 is that the distance between the vehicle and the tool is fixed, and that the angle of the tool relative to the driving direction is changed during pivoting such that the tool may only work in the extreme positions.

EP 1266551 A2 discloses a tool suspension for a tractor where the tool suspension includes a pivot arm arrangement which is pivotably mounted between the tractor and the tool suspended on the tool suspension. The tool may thus be pivoted between a first and a second extreme position on one side of and behind the tractor, respectively. A drawback of EP 1266551 is that it is not suited in connection with soil working alternatingly on one and the other side, respectively, of the tractor, as it is e.g. required in connection with use of a soil compacter in front of the tractor and a two-way plough behind the tractor.

EP0432815 A2 discloses a tool suspension for an agricultural implement which allows said implement to be shifted from one side of an agricultural vehicle to another. This is achieved by using a parallelogram like suspension, which has two parallel, solid bars pivotally attached to a frame in connection with the agricultural vehicle.

Furthermore DE4110265 A1 discloses a tool suspension for an agricultural implement which provides for a lifting mechanism to lift the implement into a vertical position for transportation purposes, thus, achieving more compact dimensions during transport.

A further drawback of the mentioned tools is that they are typically very large and therefore cumbersome to transport on road between the fields.

### Object of the Invention

It is the object of the invention to indicate a tool suspension for mounting on a vehicle where the tool suspension enables working a soil area beside the vehicle, and at the same time enabling transport driving on the road with a tool.

### Description of the Invention

According to the present invention, this is achieved by a tool suspension for a vehicle, preferably a tractor of the type mentioned in the introduction, which is peculiar in that the pivot arm arrangement includes a first arm and a second arm, where each arm includes an upper arm connected with the first frame by a first joint, and a forearm connected with the second frame by a third joint, where the upper arm and the forearm are interconnected by a second joint, and where each joint is pivotable about a largely vertical axis.

Hereby is achieved that a plot can be worked alternately at the right and the left sides of the vehicle such that the vehicle does not touch the plot subsequently or in beforehand, respectively. At the same time, transport driving is enabled with a tool on road as the tool may be provided at a position close to the vehicle.

When the other joints are straightened, the tool will have maximum spacing to the vehicle. This spacing is suitable during soil working occurring at a distance from the vehicle. When the other joints are bent, the tool may be disposed at a position very close to the vehicle without the spacing between the vehicle and the tool being limited by the outstretched length of the arms.

The first and second arms do not restrict their positioning relative to the driving direction of the tractor or the orientation of the tool suspension. The arms are named in this way in order to easily differentiate between them. Moreover, the anatomical terms upper arm and forearm are used since there is an analogy with anatomy, but this is not limiting with regard to the operation of the arms and the joints.

First joint, second joint and third joint are all pivotable about a largely vertical axis. This contributes to the tool suspension being stable while at the same time the tool suspension is pivotable in a largely horizontal plane in relation to use.

The first locking arrangement retains the pivot arm arrangement in a desired position in the said largely horizontal plane. Retention will occur at positions between the transport position and the extreme position, preferably at the extreme position or at the transport position.

The locking arrangement may, for example, include a mechanical limitation in connection with upper arm and forearm such that the second joint is prevented from being overstretched.

In a particularly advantageous embodiment of the invention, the second joint is provided with a mechanical locking means that retains the second joint at the desired position. An example of such a locking means may be a pin engaging the mechanical structure on the upper arm and the forearm, respectively, such that the joint becomes locked in a desired position.

The tool suspension is typically mounted such that it can be elevated and lowered in vertical direction.

Typically, the first frame will be designed with a triple suspension for mounting on the vehicle which by and large is the standard for agricultural tools. Besides, the tool suspension will typically be designed so that a certain rotation about a longitudinal axis in parallel with the driving direction is possible for the tool suspension in relation to the vehicle and/or for the tool in relation to the tool suspension.

This is particularly an advantage in connection with ploughing where the wheels on one side of the vehicle run in a furrow, thereby imparting a skew position to the vehicle in relation to horizontal. Besides, variations in the ground will cause the position of the tool to vary in relation to horizontal.

A practical example of using the invention could be that the tool suspension is mounted in front of the vehicle with a combination tool consisting of a two-way plough and a soil compacter, and that a second combination tool consisting of a harrow, a sowing machine and a soil compacter are mounted behind the vehicle. Hereby it is possible to perform all the procedures of cultivating a field in one and the same operation.

Another practical example of applying the invention could be to mount the tool suspension in front of the vehicle with a soil compacter and that a two-way plough is mounted behind the vehicle. A two-way plough is provided with shares such that side-laid furrows can be ploughed from both directions, as opposed to a conventional plough by which it is necessary to drive in the same direction all the time for ploughing side-laid furrows. The vehicle with a two-way plough will then have the worked plot alternately on the right and the left sides. The invention enables easy moving of the soil compacter from one side of the vehicle to the other when the vehicle changes direction at the end of a furrow.

According to a further embodiment, the tool suspension according to the invention is peculiar in that the upper arms and/or the lower arms in the pivot arrangement includes longitudinally extending arms, and that the longitudinally extending arms include a second locking arrangement.

Hereby is achieved that the tool distance to the vehicle can be further increased and kept fixed. It is advantageous that the tool suspension is as short as possible when the vehicle e.g. is driving on public road between two work places, and so long that the tool can be disposed at a distance from the vehicle such that the latter does not come in contact with the plot worked by the tool.

The longitudinally extending pivot arm arrangement also provides that the tool suspension may easily be used for different tools of varying width since the working distance of the tool relative to the vehicle may be adapted to the individual tool and/or a special task.

The second locking arrangement may lock the longitudinal extendibility such that the pivot arm arrangement is still stable during use.

According to a further embodiment, the tool suspension according to the invention is peculiar in that the longitudinally extending arms are each provided with at least a first actuator, preferably a linear hydraulic actuator, and where the second locking arrangement includes the at least one first actuator.

Hereby is achieved that displacing the tool suspension from one position to another position can be performed from a remote position, e.g. by the driver of the vehicle without leaving his seat. In that the second locking arrangement includes the actuator, it is similarly possible to operate the locking arrangement from a remote position such that the driver does not have to leave the vehicle in order to operate the second locking arrangement.

By pneumatic and hydraulic actuators, the second locking arrangement will typically be part of the valve system, and by electro-mechanical actuators, the locking arrangement will typically be part of the electric system where the actuator is short-circuited, for example, or the actuator comprises a worm gear selected with a pitch so as to be self-locking.

According to a further embodiment, the tool suspension according to the invention is peculiar in that the pivot arm arrangement includes at least a second actuator, preferably a linear hydraulic actuator, provided between the first frame and the second upper arm and/or between the first frame and the first upper arm.

Hereby is achieved that the tool suspension shift from extreme position to transport position may be effected by using the second actuator and not manually. Moreover, the actuator may be remotely controlled, for example by the tractor driver in the cab.

The actuator will preferably be a linear hydraulic actuator, but is not limited to such. The actuator may also be a pneumatic or electro-mechanical actuator.

In a preferred embodiment, the pivot arm arrangement includes an actuator between the first frame and each upper arm.

Hereby is achieved that three actuators cooperate about the pivot arm arrangement in that the actuator between the two upper arms control the degree of bending of the second joint, and the actuators between the frame and the upper arms control the moving of the pivot arm arrangement relative to the middle position.

According to a further embodiment, the tool suspension according to the invention is peculiar in that the first locking arrangement at least includes the at least one second actuator.

By integrating the actuator in the first locking arrangement, it is similarly possible to operate the locking arrangement from a remote position such that the driver does not have to leave the vehicle.

By pneumatic and hydraulic actuators, the locking arrangement will typically be part of the valve system, and by electro-mechanical actuators, the locking arrangement will typically be part of the electric system where the actuator is short-circuited, for example, or the actuator comprises a worm gear selected with a pitch so as to be self-locking.

According to a further embodiment, the tool suspension according to the invention is peculiar in that the pivot arm arrangement includes at least one third actuator provided between the second upper arm and the first upper arm.

Hereby is achieved that the tool suspension shift from extreme position to transport position may be effected by using the third actuator and not manually. Moreover, the actuator may be remotely controlled, for example by the tractor driver in the cab.

Furthermore, the third actuator provides that the distance between the upper arms is kept constant. This counteracts that the first and second arms are pressed against each other by lateral action of force when the tool suspension is in use.

According to a further embodiment, the tool suspension according to the invention is peculiar in that the first locking arrangement at least includes the at least one third actuator.

Hereby is achieved that the locking arrangement is reinforced as the arms are more easily kept fixed in relation to each other.

In a very suitable embodiment, the tool suspension is equipped with an actuator between each upper arm and the first frame, and an actuator between the two upper arms.

Hereby is achieved that the tool suspension may easily change position since the actuators cooperate in that the other actuators primarily move the pivot arm arrangement from one side of the vehicle to the other, and that the third actuator primarily moves the pivot arm arrangement from extreme position to transport position. Moreover, the tool suspension is more stable in use since the locking arrangement includes the individual actuators which thereby reinforce each other. According to a further embodiment, the tool suspension according to the invention is peculiar in that each forearm includes a fourth actuator, preferably a linear hydraulic actuator, provided between the second frame and the forearm and that the first locking arrangement at least includes the fourth actuators.

Hereby is achieved that the forearms and thereby the second frame can be moved independently of the upper arms by using the fourth actuator and not manually. Moreover, the actuator may be remotely controlled, for example by the tractor driver in the cab.

Furthermore, it is achieved that the locking arrangement may retain the second frame and the forearms in a certain position.

According to a further embodiment, the tool suspension according to the invention is peculiar in that the pivot arm arrangement includes a spacer element provided between the first and second arm close to the other joints.

The spacer element will typically be applied in connection with the other joints in the same way as the connection of the first and second frame to the forearms and upper arms.

Hereby is achieved that the first frame, the upper arms and the spacer element form a first parallelogram. Furthermore, the spacer element, the forearms and the second frame similarly form a second parallelogram. This causes the second frame, and thereby a possible attached tool, to be parallel with the first frame.

According to a further embodiment, the tool suspension according to the invention is peculiar in that the pivot arm arrangement includes at least one fifth actuator provided between the upper arm(s) and the lower arm(s), and that the first locking arrangement includes the at least one fifth actuator.

Hereby is achieved that the second parallelogram can be pivoted independently of the first parallelogram. This imparts great mobility to the tool suspension, ensuring that the tool can get close to the vehicle in the transport position.

Furthermore, it is achieved that the locking arrangement may retain the second parallelogram in a certain position.

The tool suspension may be mounted such that the second frame is in front of the first frame relative to the driving direction of the vehicle for forward driving.

Moreover, the tool suspension may be mounted such that the first frame is in front of the second frame relative to the driving direction of the vehicle for forward driving.

By the two above described ways of mounting are achieved that tools can be disposed in front of and behind the vehicle. This is advantageous where it is desired that a tool is to work an area at one and the other side of a vehicle, respectively, and where the changing between the sides is to be performed easily.

The same vehicle may additionally be fitted with two tool suspensions at the same time - one in front of and one behind the vehicle. This provides great flexibility to the working of the soil.

### Description of the Drawing

The invention will now be explained more closely with reference to the accompanying drawing, wherein:
- Fig. 1: shows a vehicle seen from above with the tool suspension mounted and the tool in a transport position;
- Fig. 2: shows a vehicle seen from above with the tool suspension mounted and the tool in an extreme position at the left side of the driving direction;
- Fig. 3: shows a vehicle seen from above with the tool suspension mounted and the tool in an extreme position at the right side of the driving direction;
- Fig. 4: shows a first embodiment of the tool suspension;
- Fig. 5: shows a second embodiment of the tool suspension, as seen from above;
- Fig. 6: shows the tool suspension of Fig. 5 in the transport position with the second frame in line with the driving direction;
- Fig. 7: shows the tool suspension from Fig. 5 where the arms in the pivot arm arrangement are partly outstretched;
- Fig. 8: shows the tool suspension of fig. 5 where the arms in the pivot arm arrangement are in outstretched position, and where the second frame is at a position in line with the driving direction;
- Fig. 9: shows the tool suspension of fig. 5 in an extreme position with the second frame beside the driving direction;
- Fig. 10: shows the tool suspension of fig. 9 with the longitudinally extending arms 10 in an extreme position;
- Fig. 11: shows a third embodiment of the tool suspension shown in the transport position with the second frame in line with the driving direction;
- Fig. 12: shows the tool suspension of fig. 11 in a position between the transport position and an extreme position with the arms partly outstretched and with the second frame beside the driving direction;
- Fig. 13: shows the tool suspension of fig. 11 in an extreme position with arms fully outstretched and with the second frame beside the driving direction;
- Fig. 14: shows a fourth embodiment of the tool suspension in the transport position;
- Fig. 15: shows the fourth embodiment of the tool suspension in a first position between the transport position and an extreme position;
- Fig. 16: shows a fourth embodiment of the tool suspension in a second position between the transport position and an extreme position; and
- Fig. 17: shows a fourth embodiment of the tool suspension in an extreme position.

In the explanation of the figures, identical or corresponding elements will be provided with the same designations in different figures. Therefore, no explanation of all details will be given in connection with each single figure/embodiment.

### Detailed Description of Embodiments of the Invention

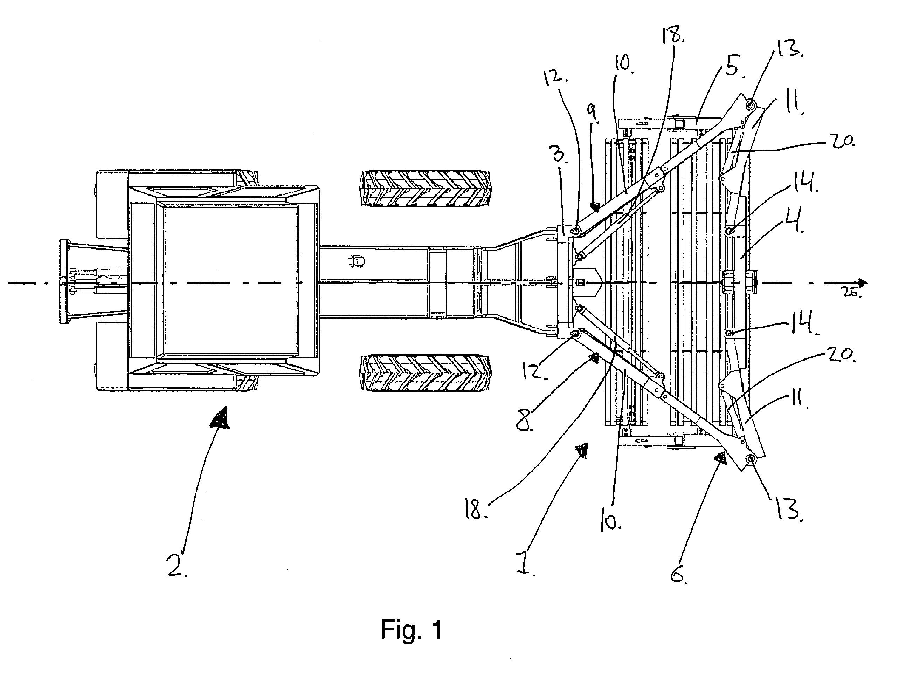

Fig. 1 shows a vehicle 2 seen from above mounted with the tool suspension 1. The pivot arm arrangement 6 is in the transport position, and the tool 5 is therefore close to the vehicle 2. This contributes to the vehicle 2 being capable of driving on public roads between working places with a tool 5 mounted in the tool suspension 1 with limited overhang.

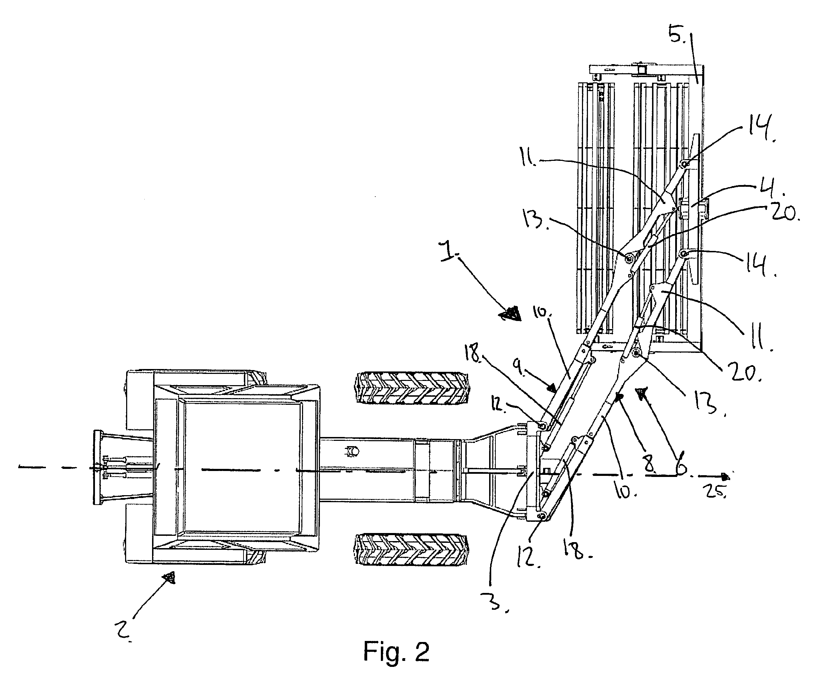

Fig. 2 shows a vehicle 2 seen from above mounted with the tool suspension 1. The pivot arm arrangement 6 is in an extreme position to the left of the driving direction 25 of the vehicle. The tool 5 may thus work on an area which the vehicle is not in contact with while driving.

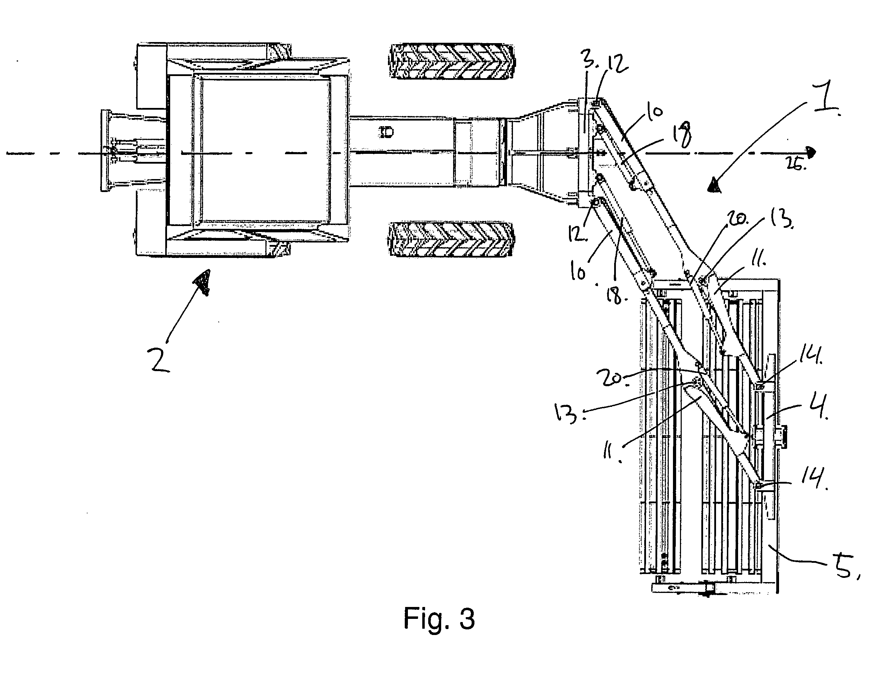

Fig. 3 shows a vehicle 2 seen from above mounted with the tool suspension 1. The pivot arm arrangement 6 is in an extreme position to the right of the driving direction 25 of the vehicle. The tool 5 may thus work on an area which the vehicle is not in contact with while driving.

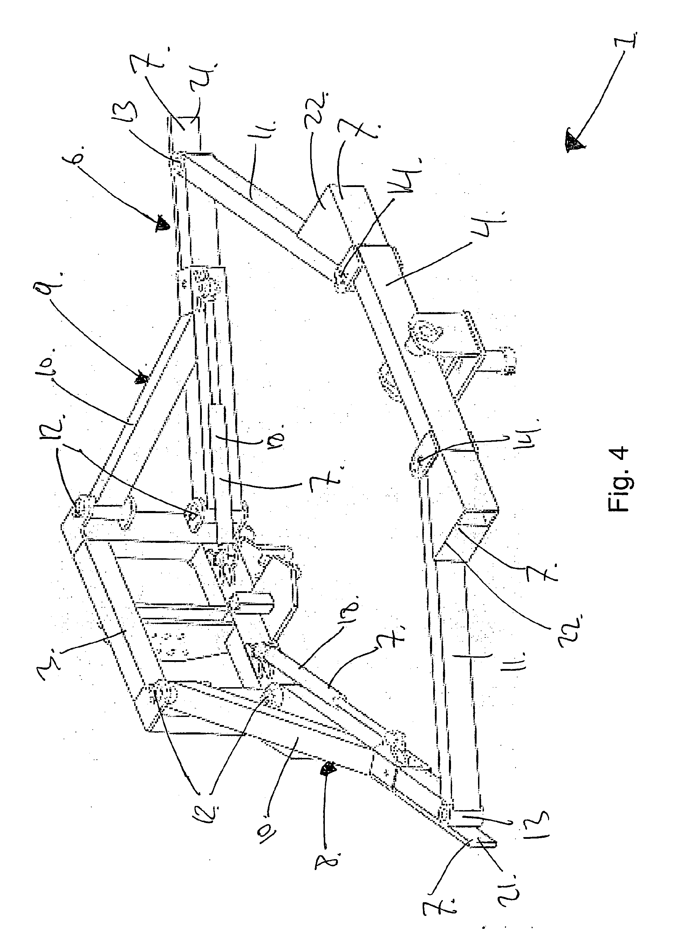

Fig. 4 shows a first embodiment of the tool suspension 1. The tool suspension 1 includes a first frame 3 on which the tool suspension 1 can be mounted on a vehicle 2. A pivot arm arrangement 6 comprises a first arm 8 and a second arm 9. Each arm consists of an upper arm 10 and a forearm 11. The upper arms 10 are pivotably coupled to the first frame 3 by a first joint 12. In this embodiment, the upper arms 10 are designed such that part of the arm forms a triangle, causing the tool suspension 1 to be stable with regard to vertical actions of force. The upper arms 10 are coupled to the forearms 11 by a second joint 13. The forearms 11 are connected to the second frame 4 by a third joint 14. The second frame 4 may be coupled to a tool (not shown). The joints 12, 13, 14 are pivotable about a vertical axis such that the pivot arm arrangement 6 may pivot in a horizontal plane.

The pivot arm arrangement 6 is provided with two other actuators 18 which are connected between the first frame 3 and the upper arm 10 on the first arm 8 and the first frame 3 and the upper arm 10 on the second arm 9, respectively. The other actuators 18 are used for bending and stretching the arms 8, 9 and to pivot the pivot arm arrangement 6 in a horizontal plane after locking the arms in outstretched position.

In this embodiment, the other joints 13 move away from each other when the arms 8, 9 are bent, and against each other when the arms 8, 9 are stretched.

A locking arrangement 7 retains the tool suspension in/between the extreme position and the transport position. On the figure, the tool suspension 1 is shown in the transport position. In this embodiment, the locking arrangement 7 includes the other actuators 18 and stop blocks 21, 22 which are secured to each upper arm 10 and extend at the outer side of the upper arm 10 past the second joint 13 such that it prevents overstretching of the second joint 13.

In the transport position, pivoting of the forearms 11 is limited by abutment against a stop block 22 at each side of the second frame 4, and in an extreme position pivoting of the forearms 11 is limited by abutment against the stop block 21.

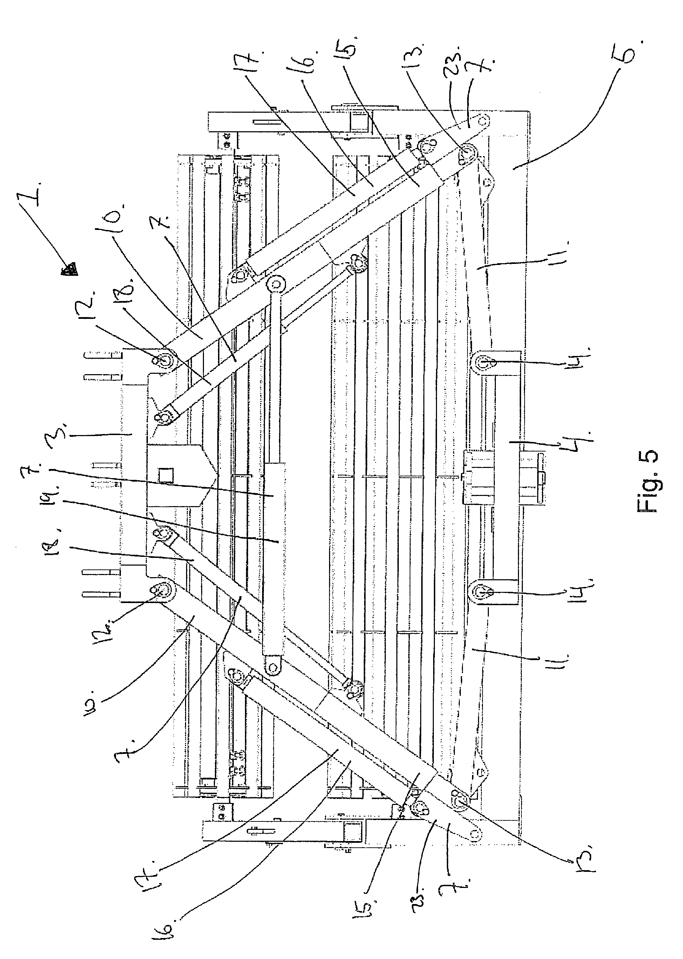

Fig. 5 shows a second embodiment of the tool suspension 1, as seen from above. The tool suspension 1 includes a first frame 3 on which the tool suspension 1 can be mounted on a vehicle 2 (not shown). A pivot arm arrangement 6 comprises a first arm 8 and a second arm 9. Each arm consists of an upper arm 10 and a forearm 11. The upper arms 10 are pivotably coupled to the first frame 3 by a first joint 12. The forearms 11 are connected to the second frame 4 by a third joint 14. The second frame is releasably coupled to a tool 5. A locking arrangement 7 retains the tool suspension in/between the extreme position and the transport position.

The upper arms 10 are longitudinally extending arms 15 as the upper arm 10 is telescoping. The longitudinal extension is actuated by the first actuators 17 which are connected to the longitudinally extending arms 15.

The other actuators 18 which are connected between the first frame 3 and the upper arms 10 are used for stretching the arms 8, 9 and for pivoting the pivot arm arrangement 6 in horizontal plane.

A third actuator 19 is connected between the two upper arms 10. The third actuator 19 is used for stretching the second joint 13 when retracted and bending the second joint 13 when extended.

In this embodiment, the other joints 13 move away from each other when the arms 8, 9 are bent, and against each other when the arms 8,9 are stretched.

On Fig. 5, the tool suspension 1 is shown in the transport position. In this embodiment, the locking arrangement 7 includes the other actuators 18, the third actuator 19 and the stop block 23. The stop block 23 may be equipped with a detachable locking pin such that the forearm 11 may be fixed mechanically to the upper arm 10 when the arms 10 are stretched.

The longitudinal extension of the longitudinally extending arms 15 is locked by a second locking arrangement 16 which includes the first actuators 17.

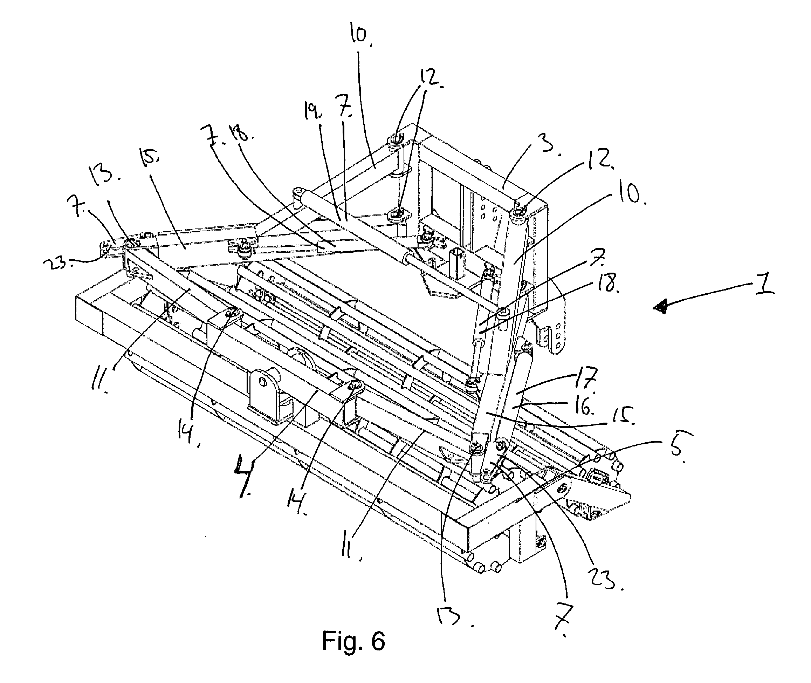

Figures 6-10 show how the tool suspension 1 is moved from the transport position to an extreme position beside the driving direction.

Fig. 6 shows the tool suspension 1 in the transport position with the second frame 4 in line with the driving direction 25 and the other joints 13 bent.

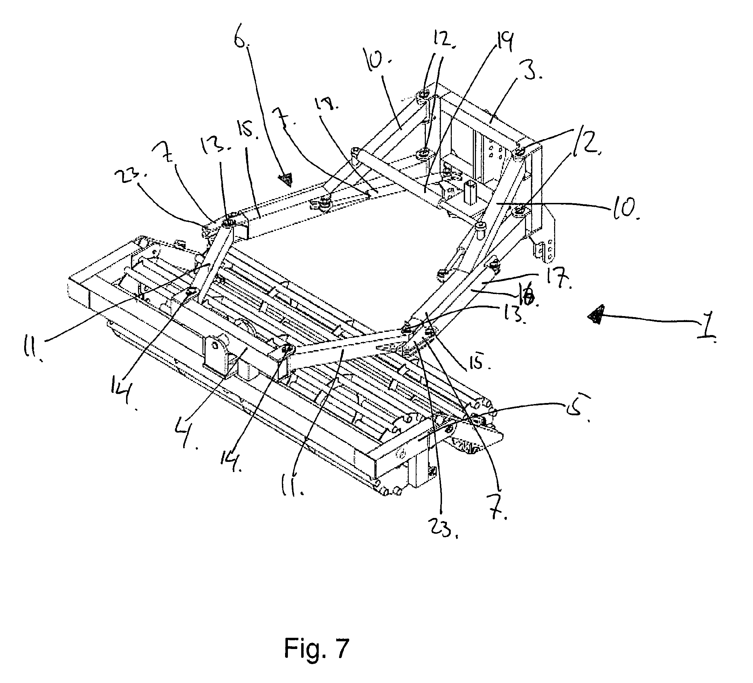

Fig. 7 shows the tool suspension 1 where the arms 8, 9 in the pivot arm arrangement 6 are partly outstretched.

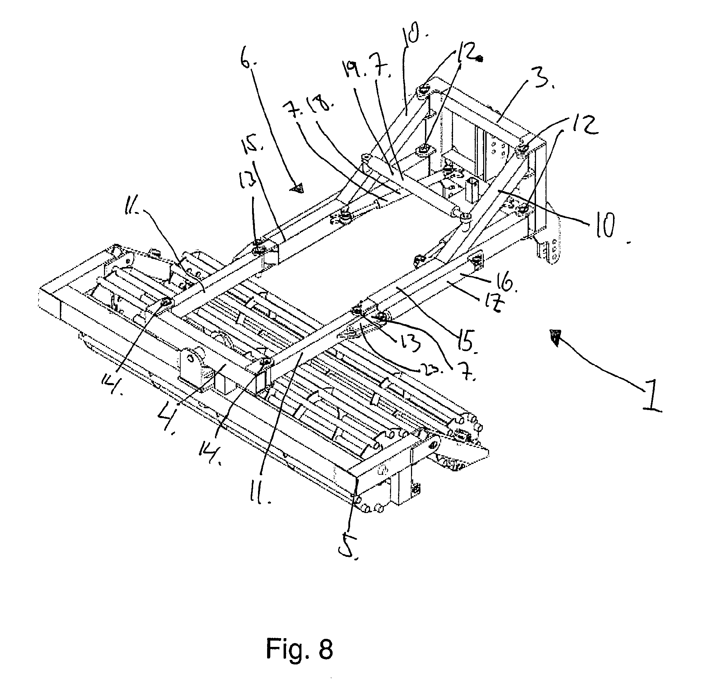

Fig. 8 shows the tool suspension 1 in an extreme position where the arms 8, 9 in the pivot arm arrangement 6 are outstretched, and where the second frame 4 is at a position in line with the driving direction 25. Hereby, the stop block 23 comes into contact with the forearm 11, thereby locking against movement in one direction. A pin (not shown) may be placed in the stop block so that the second joint 13 is locked.

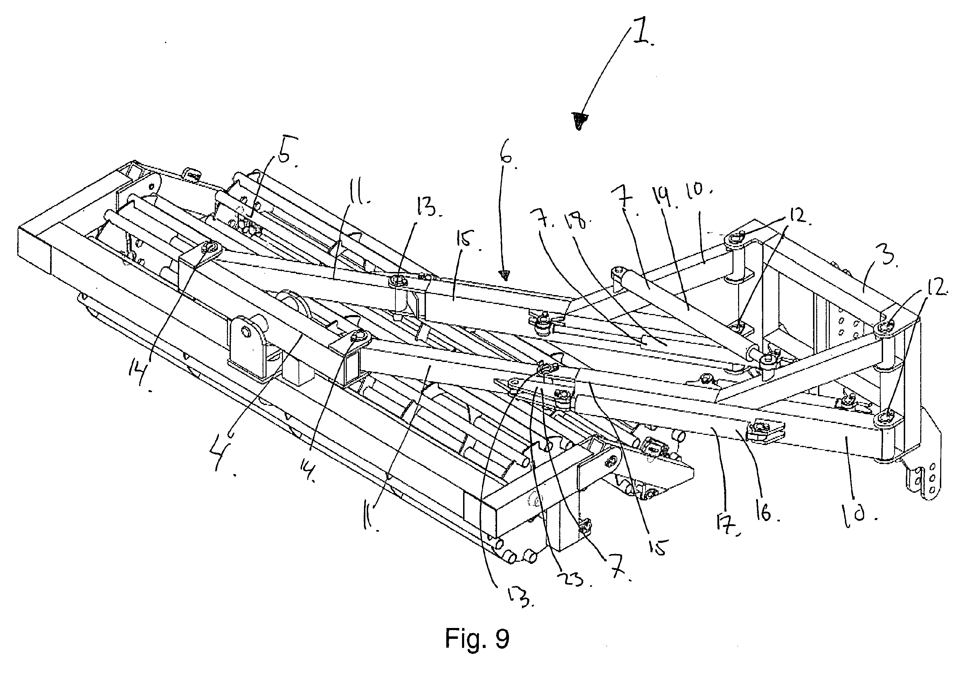

Fig. 9 shows the tool suspension 1 in an extreme position where the pivot arm arrangement 6 is displaced, and the second frame 4 is thereby at a position beside the driving direction 25.

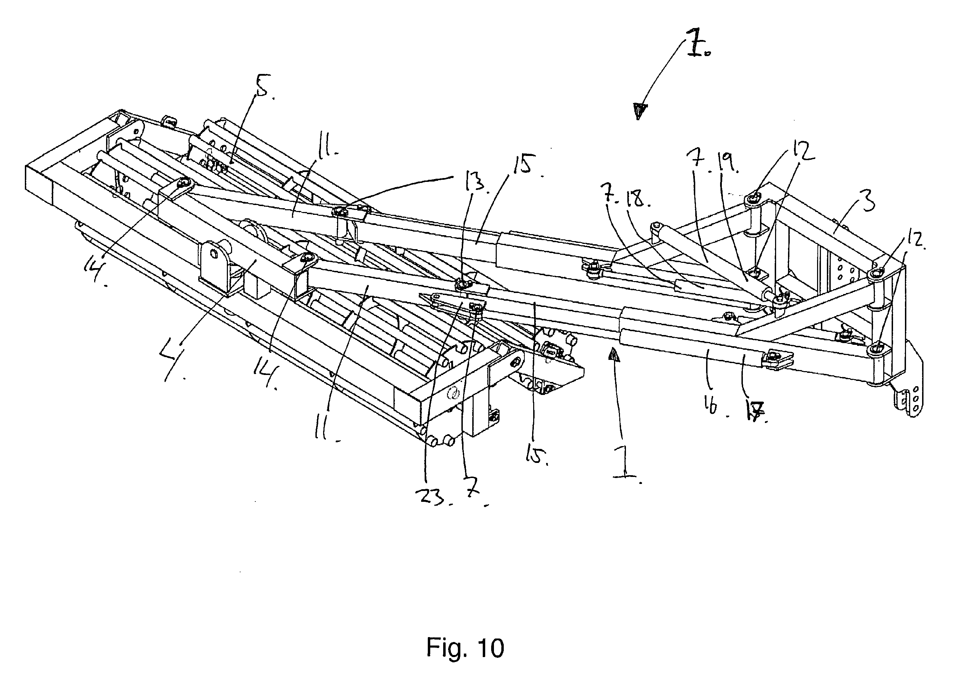

Fig. 10 shows the tool suspension 1 in an extreme position as in figure 9, but where the longitudinally extending arms 15 are displaced such that the second frame 4 is moved farther away from the driving direction 25.

The longitudinal displacement may be adjusted depending on the width of the tool, the width of the vehicle or depending on the task.

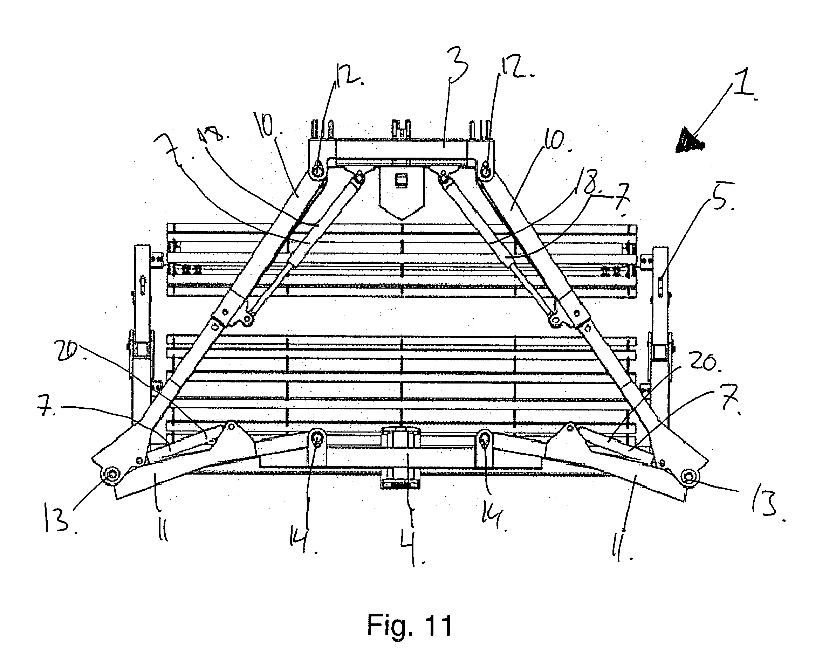

Fig. 11 shows a third embodiment of the tool suspension 1 shown in the transport position. In this embodiment, the tool suspension 1 includes a first frame 3 on which the tool suspension 1 can be mounted on a vehicle. A pivot arm arrangement 6 comprises a first arm 8 and a second arm 9. Each arm consists of an upper arm 10 and a forearm 11. The upper arms 10 are pivotably coupled to the first frame 3 by a first joint 12. The forearms 11 are connected to the second frame 4 by a third joint 14. The second frame is coupled to a tool 5.

The other actuators 18 which are connected between the first frame 3 and the upper arms 10 are used for stretching the arms 8, 9 and for pivoting the pivot arm arrangement 6 in horizontal plane.

In this embodiment, the other joints 13 move away from each other when the arms 8, 9 are bent, and against each other when the arms 8, 9 are stretched.

Fourth actuators 20 are connected between the upper arm 10 and the forearm 11. The fourth actuators 20 control pivoting about the second joint 13.

A locking arrangement 7 retains the tool suspension either in an extreme position or in the transport position. In this embodiment, the locking arrangement 7 includes the other actuators 18 and the fourth actuators 20.

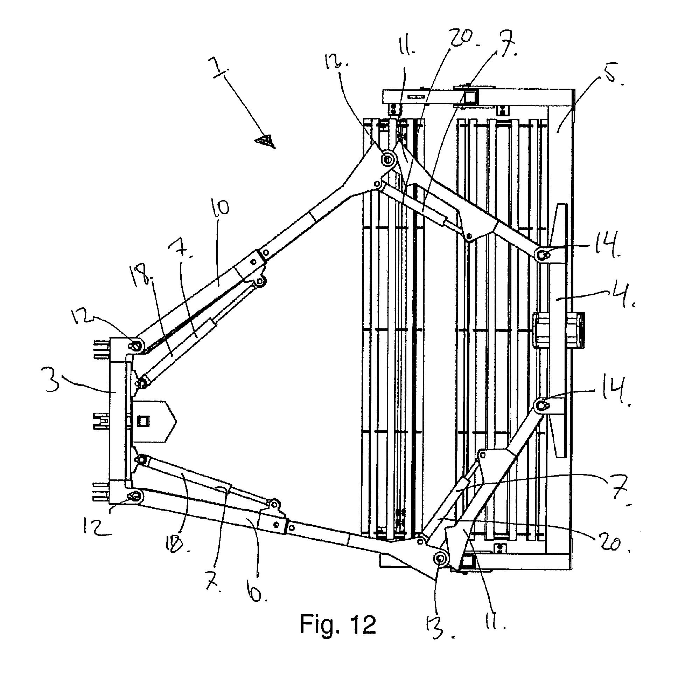

Fig. 12 shows the third embodiment of the tool suspension 1 in a position with the second frame 4 in a position beside the driving direction 25.

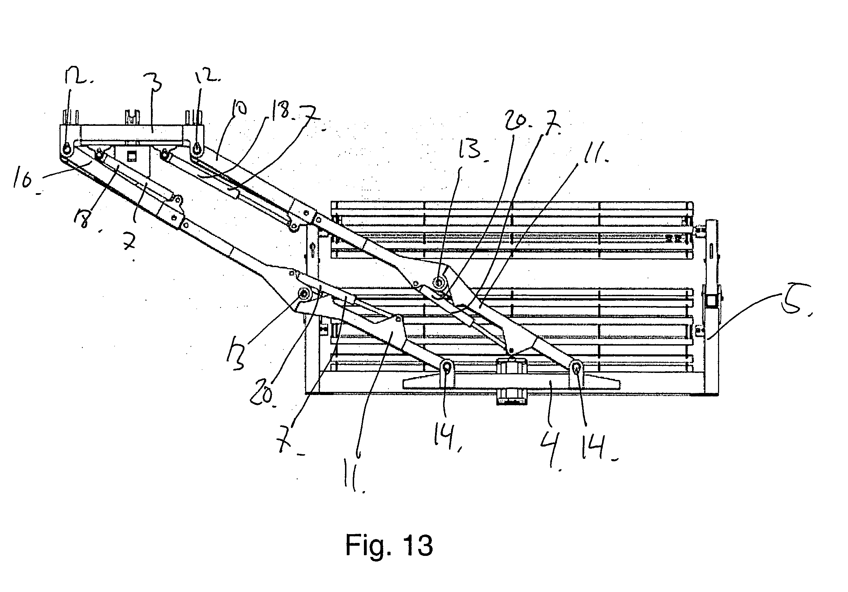

Fig. 13 shows the third embodiment of the tool suspension 1 in an extreme position with the second frame 4 in a position beside the driving direction 25.

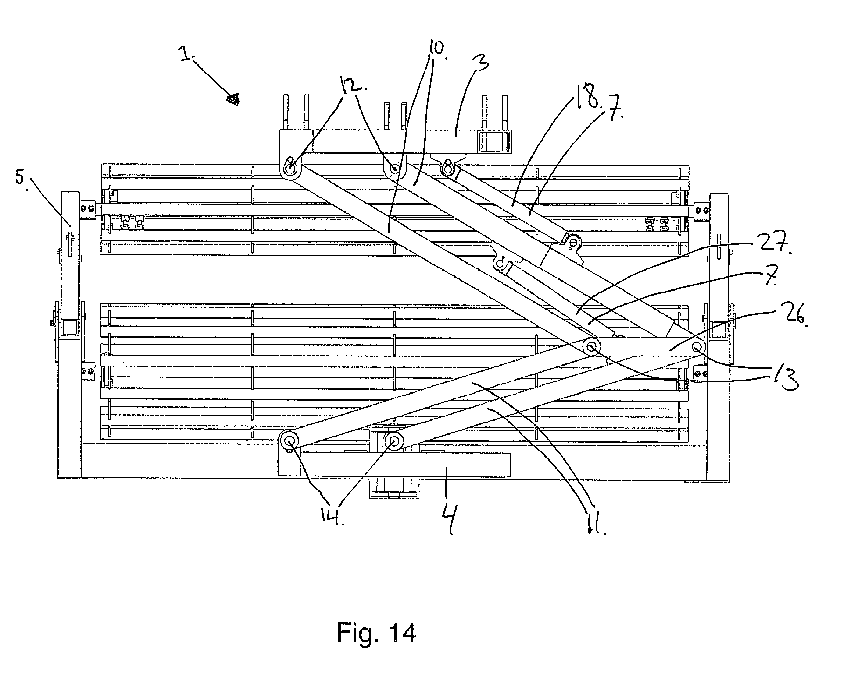

Figures 14 - 17 show a fourth embodiment of the tool suspension 1 under stepwise movement from the transport position to an extreme position beside the driving direction.

Fig. 14 shows a fourth embodiment of the tool suspension 1 in the transport position. In this embodiment, the other joints 13 are connected with a spacer element 26. This cause the first frame 3, the upper arms 10 and the spacer element 26 to form a parallelogram. Furthermore, the spacer element 26, the forearms 11 and the second frame 4 similarly form a parallelogram. A second actuator 18 is connected between the first frame 3 and one of the upper arms 10. A fifth actuator 27 is connected between the same upper arm 10 and one of the forearms 11. A locking arrangement 7 includes the second actuator 18 and the fifth actuator 27, providing that the tool suspension 1 may be locked in a desired position.

In this embodiment, the distance between the other joints 13 is fixed when the arms 8, 9 are bent or stretched.

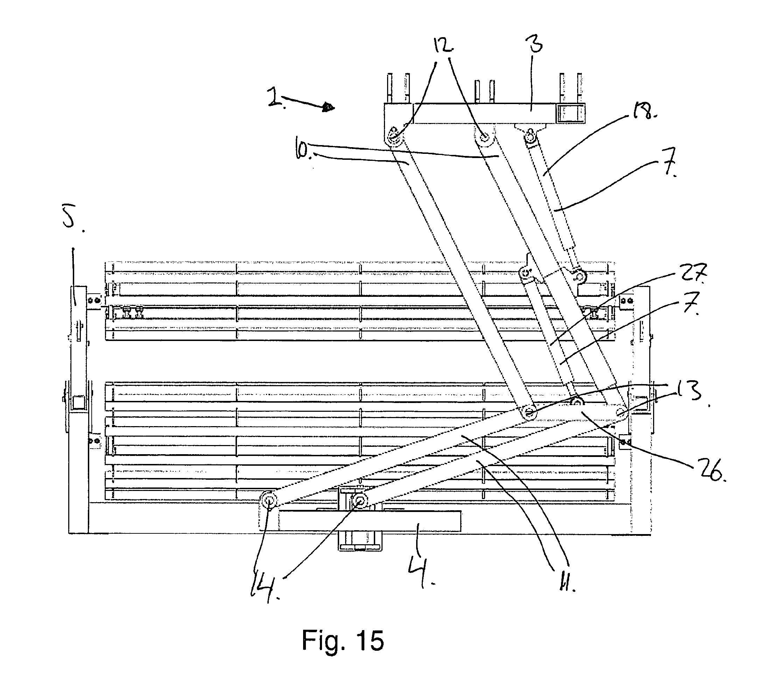

Fig. 15 shows the fourth embodiment of the tool suspension 1 in a first position between the transport position and an extreme position.

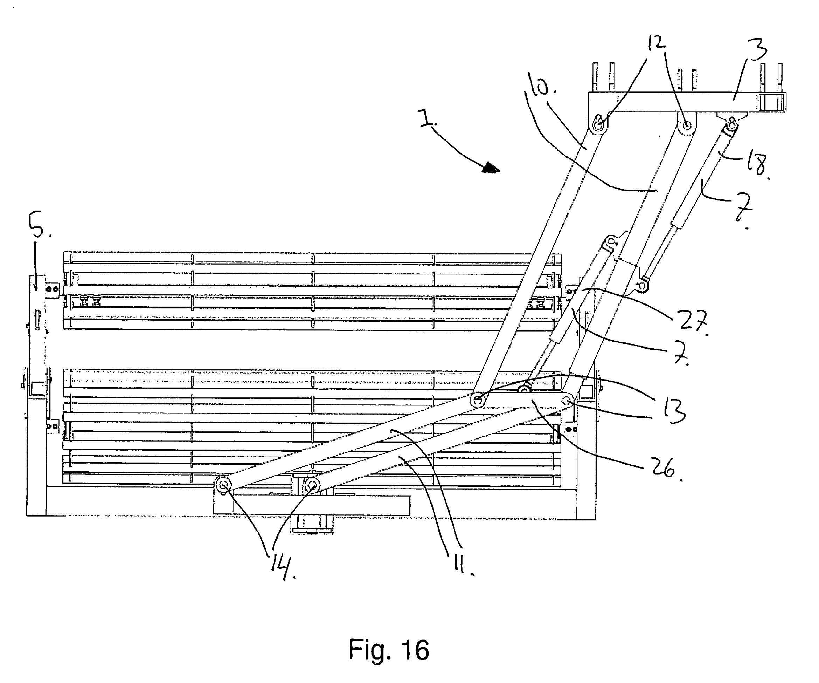

Fig. 16 shows a fourth embodiment of the tool suspension 1 in a second position between the transport position and an extreme position.

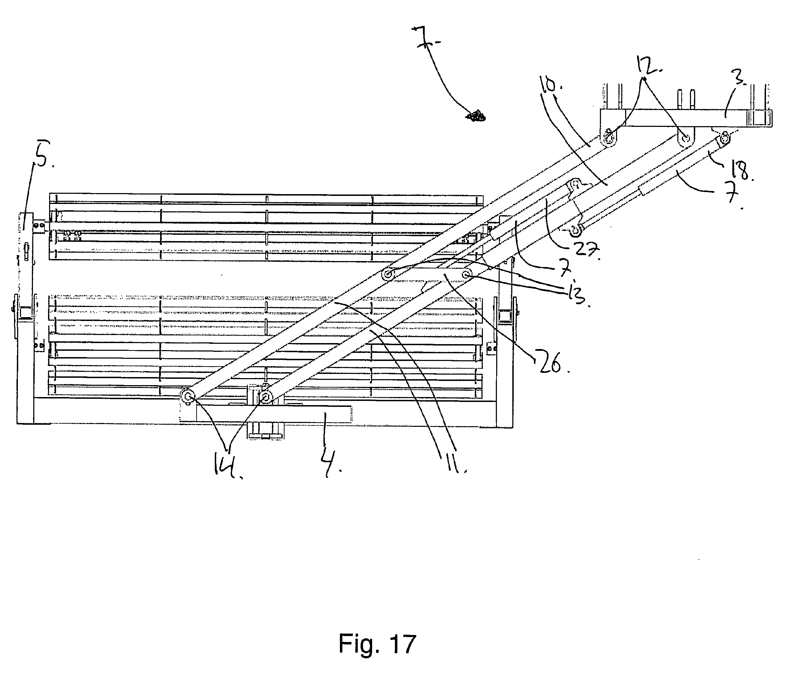

Fig. 17 shows a fourth embodiment of the tool suspension 1 in an extreme position.

The reference numbers are listed below:
1. Tool Suspension
2. Vehicle
3. First frame
4. Second frame
5. Tool
6. Pivot arm arrangement
7. First locking arrangement
8. First arm
9. Second arm
10. Upper arm
11. Forearm
12. First joint
13. Second joint
14. Third joint
15. Longitudinally extending arms
16. Second locking arrangement
17. First actuator
18. Second actuator
19. Third actuator
20. Fourth actuator
21. Stop block at second joint
22. Stop block at third joint
23. Stop block with detachable locking pin
25. Driving direction of vehicle
26. Spacer element
27. Fifth actuator

## Claims

1. A tool suspension (1) for a vehicle (2), preferably a tractor, including a first frame (3) for mounting the tool suspension (1) and a second frame (4) for mounting a tool (5), where the tool suspension (1) includes a pivot arm arrangement (6) which is pivotably mounted between the first (3) and second (4) frame, where the tool suspension (1) has at least one extreme position with the second frame (4) in a position beside the driving direction of (25) the vehicle, where the tool suspension (1) has a transport position with the second frame (4) in a position in line with the driving direction (25) of the vehicle, and where the tool suspension (1) is provided with a first locking arrangement (7) for retaining the second frame (4) in a position from the extreme position and to the transport position, the pivot arm arrangement (6) including a first arm (8) and a second arm (9), where each arm (8, 9) includes an upper arm (10) connected with the first frame (3) by a first joint (12), **characterised in that**, a forearm (11) is connected with the second frame (4) by a third joint (14), where the upper arm (10) and the forearm (11) are interconnected by a second joint (13), and where each joint (12, 13, 14) is pivotable about a largely vertical axis.

2. Tool suspension according to claim 1, **characterised in that** the upper arms (10) and/or the forearms (11) in the pivot arrangement (6) includes longitudinally extending arms (15), and that the longitudinally extending arms include a second locking arrangement (16).

3. Tool suspension according to claim 2, **characterised in that** the longitudinally extending arms (15) are each provided with at least a first actuator (17), preferably a linear hydraulic actuator, and where the second locking arrangement (16) includes the at least one first actuator (17).

4. Tool suspension according to any preceding claim, **characterised in that** the pivot arm arrangement (6) includes at least a second actuator (18), preferably a linear hydraulic actuator, provided between the first frame (3) and the second upper arm and/or between the first frame (3) and the first upper arm.

5. Tool suspension according to any preceding claim, **characterised in that** the first locking arrangement (7) at least includes the at least one second actuator (18).

6. Tool suspension according to any preceding claim, **characterised in that** the pivot arm arrangement (6) includes at least a third actuator (19) provided between the second upper arm and the first upper arm.

7. Tool suspension according to any preceding claim, **characterised in that** the first locking arrangement (7) at least includes the at least one third actuator (19).

8. Tool suspension according to any preceding claim, **characterised in that** each forearm (11) includes a fourth actuator (20), preferably a linear hydraulic actuator, provided between the second frame (4) and the forearm (11), and that the first locking arrangement (7) at least includes the fourth actuators (20).

9. Tool suspension according to any preceding claim, **characterised in that** the pivot arm arrangement (6) includes a spacer element (26) provided between the first and the second arm (8, 9) close to the other joints (13).

10. Tool suspension according to any preceding claim, **characterised in that** the pivot arm arrangement (6) includes at least a fifth actuator (27) provided between the upper arm(s) (10) and the forearm(s) (11), and that the first locking arrangement (7) includes the at least one fifth actuator (27).

## Patentansprüche

1. Werkzeugaufhängung (1) für ein Fahrzeug (2), vorzugsweise einen Traktor, die einen ersten Rahmen (3) für die Montage der Werkzeugaufhängung (1) und einen zweiten Rahmen (4) für die Montage eines Werkzeuges (5) umfasst, wobei die Werkzeugaufhängung (1) eine Schwenkarmanordnung (6) umfasst, die zwischen dem ersten (3) und dem zweiten (4) Rahmen drehbar angeordnet ist, wobei die Werkzeugaufhängung (1) mindestens eine äußerste Position mit dem zweiten Rahmen (4) in einer Position neben der Fahrrichtung (25) des Fahrzeuges besitzt, wobei die Werkzeugaufhängung eine Transportposition mit dem zweiten Rahmen (4) in einer Position auf der gleichen Linie wie der Fahrrichtung (25) des Fahrzeuges hat, und wobei die Werkzeugaufhängung (1) zum Festhalten des zweiten Rahmens (4) in einer Position von der äußersten Position und bis zur Transportposition mit einer ersten Verschlussvorrichtung (7) versehen ist, die Schwenkarmanordnung (6) umfassend einen ersten Arm (8) und einen zweiten Arm (9), wobei jeder Arm (8, 9) einen mit dem ersten Rahmen durch ein Gelenk verbundenen oberen Arm (10) umfasst, **dadurch gekennzeichnet dass** ein Unterarm (11) mit dem zweiten Rahmen (4) durch ein drittes Gelenk (14) verbunden ist, wobei der obere Arm (10) und der Unterarm (11) durch ein zweites Gelenk (13) miteinander verbunden sind, und wobei jedes Gelenk (12, 13, 14) um eine vorwiegend vertikale Achse drehbar ist.

2. Werkzeugaufhängung nach Anspruch 1, **dadurch gekennzeichnet, dass** die oberen Arme (10) und/oder die Unterarme (11) in der Schwenkarmanordnung (6) längsverstellbare Arme (15) umfassen, und dass die längsverstellbaren Arme eine zweite Verschlussvorrichtung (16) umfassen.

3. Werkzeugaufhängung nach Anspruch 2, **dadurch gekennzeichnet, dass** die längsverstellbaren Arme (15) jeder für sich mit mindestens eine erste Betätigungsvorrichtung (17) versehen sind, vorzugsweise eine lineare hydraulische Betätigungsvorrichtung, und wobei die zweite Verschlussvorrichtung (16) die mindestens eine erste Betätigungsvorrichtung (17) umfasst.

4. Werkzeugaufhängung nach irgendeinem der vorhergehenden Ansprüche, **dadurch gekennzeichnet, dass** die Schwenkarmanordnung (6) mindestens eine zweite Betätigungsvorrichtung (18) umfasst, vorzugsweise eine lineare hydraulische Betätigungsvorrichtung, vorgesehen zwischen dem ersten Rahmen (3) und dem zweiten oberen Arm und/oder zwischen dem ersten Rahmen (3) und dem ersten oberen Arm.

5. Werkzeugaufhängung nach irgendeinem der vorhergehenden Ansprüche, **dadurch gekennzeichnet, dass** die erste Verschlussvorrichtung (7) mindestens die mindestens eine zweite Betätigungsvorrichtung (18) umfasst.

6. Werkzeugaufhängung nach irgendeinem der vorhergehenden Ansprüche, **dadurch gekennzeichnet, dass** die Schwenkarmanordnung (6) mindestens eine zwischen dem zweiten oberen Arm und dem ersten oberen Arm vorgesehene dritte Betätigungsvorrichtung (19) umfasst.

7. Werkzeugaufhängung nach irgendeinem der vorhergehenden Ansprüche, **dadurch gekennzeichnet, dass** die erste Verschlussvorrichtung (7) mindestens die mindestens eine dritte Betätigungsvorrichtung (19) umfasst.

8. Werkzeugaufhängung nach irgendeinem der vorhergehenden Ansprüche, **dadurch gekennzeichnet, dass** jeder Unterarm (11) eine vierte Betätigungsvorrichtung (20) umfasst, vorzugsweise eine lineare hydraulische Betätigungsvorrichtung, vorgesehen zwischen dem zweiten Rahmen (4) und dem Unterarm (11), und dass die erste Verschlussvorrichtung (7) mindestens die vierten Betätigungsvorrichtungen (20) umfasst.

9. Werkzeugaufhängung nach irgendeinem der vorhergehenden Ansprüche, **dadurch gekennzeichnet, dass** die Schwenkarmanordnung (6) einen zwischen dem ersten und dem zweiten Arm (8,9) vorgesehene Abstandshalter (26) dicht an den anderen Gelenken (13) umfasst.

10. Werkzeugaufhängung nach irgendeinem der vorhergehenden Ansprüche, **dadurch gekennzeichnet, dass** die Schwenkarmanordnung (6) mindestens eine zwischen dem (den) oberen Arm(en) (10) und dem (den) Unterarm(en) (11) vorgesehene fünfte Betätigungsvorrichtung umfasst, und dass die erste Verschlussvorrichtung (7) die mindestens eine fünfte Betätigungsvorrichtung (27) umfasst.

## Revendications

1. Suspension d'outil (1) pour un véhicule (2), de préférence un tracteur, comprenant un premier cadre (3) pour le montage de la suspension de l'outil (1) et un second cadre (4) pour le montage d'un outil (5), où la suspension de l'outil (1) comprend un système à bras de pivot (6) qui est monté de manière pivotante entre le premier (3) et le second (4) cadre, où la suspension de l'outil (1) présente au moins une position extrême avec le second cadre (4) dans une position à côté de la direction d'entraînement (25) du véhicule, où la suspension de l'outil (1) possède une position de transport avec le deuxième cadre (4) dans une position alignée avec la direction d'entraînement (25) du véhicule, et dans laquelle la suspension de l'outil (1) est pourvue d'un premier mécanisme de verrouillage (7) pour retenir le second cadre (4) dans une position allant de la position extrême et à la position de transport, le système à bras de pivot (6) comprenant un premier bras (8) et un second bras (9), où chaque bras (8, 9) comprend un bras supérieur (10) relié au premier cadre (3) par une première articulation (12), **caractérisée en ce qu'**un avant-bras (11) est relié au second cadre (4) par une troisième articulation (14), dans laquelle le bras supérieur (10) et l'avant-bras (11) sont raccordés l'un à l'autre par une deuxième articulation (13), et où chaque articulation (12, 13, 14) peut pivoter autour d'un axe sensiblement vertical.

2. Suspension d'outil selon la revendication 1, **caractérisée en ce que** les bras supérieurs (10) et/ou les avant-bras (11) dans le système de pivot (6) comprennent des bras s'étendant dans le sens longitudinal (15), et que les bras s'étendant dans le sens longitudinal comprennent un second mécanisme de verrouillage (16).

3. Suspension d'outil selon la revendication 2, **caractérisée en ce que** les bras s'étendant longitudinalement (15) sont chacun pourvus d'au moins un premier vérin (17), de préférence un vérin hydraulique linéaire, et le second dispositif de verrouillage (16) comprend le au moins un premier vérin (17).

4. Suspension d'outil selon l'une quelconque des revendications précédentes, **caractérisée en ce que** le système à bras de pivot (6) comprend au moins un second vérin (18), de préférence un vérin hydraulique linéaire, disposé entre le premier cadre (3) et le second bras supérieur et/ou entre le premier cadre (3) et le premier bras supérieur.

5. Suspension d'outil selon l'une quelconque des revendications précédentes, **caractérisée en ce que** le premier système de verrouillage (7) comprend au moins le au moins un second vérin (18).

6. Suspension d'outil selon l'une quelconque des revendications précédentes, **caractérisée en ce que** le système à bras de pivot (6) comprend au moins un troisième vérin (19) prévu entre le second bras et le premier bras supérieur.

7. Suspension d'outil selon l'une quelconque des revendications précédentes, **caractérisée en ce que** le premier système de verrouillage (7) au moins comprend le au moins un troisième vérin (19).

8. Suspension d'outil selon l'une quelconque des revendications précédentes, **caractérisée en ce que** chaque avant-bras (11) comprend un quatrième vérin (20), de préférence un vérin hydraulique linéaire, prévu entre le deuxième cadre (4) et l'avant-bras (11), et que le premier mécanisme de verrouillage (7) comprend au moins les quatrièmes vérins (20).

9. Suspension d'outil selon l'une quelconque des revendications précédentes, **caractérisée en ce que** le système à bras de pivot (6) comprend un élément d'espacement (26) disposé entre le premier et le second bras (8, 9) à proximité des autres articulations (13).

10. Suspension d'outil selon l'une quelconque des revendications précédentes, **caractérisée en ce que** le système à bras de pivot (6) comprend au moins un cinquième vérin (27) prévu entre le (les) bras supérieur(s) (10) et le (les) avant-bras (11), et que le premier mécanisme de verrouillage (7) comprend au moins un cinquième vérin (27).
